# EUROPÄISCHE PATENTSCHRIFT

(11) **EP 0 769 178 B1**
(45) Veröffentlichungstag und Bekanntmachung des Hinweises auf die Patenterteilung: **26.01.2000**
(21) Anmeldenummer: 95922414.8
(22) Anmeldetag: 22.06.1995
(51) Int. Cl.: G06K 19/16

(54) **STRUKTURANORDNUNG MIT BEUGUNGSOPTISCH WIRKSAMER RELIEFSTRUKTUR**
STRUCTURAL ASSEMBLY WITH PROFILE GIVING DIFFRACTIVE PROPERTIES
STRUCTURE AU RELIEF A EFFET DE DIFFRACTION OPTIQUE

(30) Priorität: 02.07.1994 DE 4423293
(43) Veröffentlichungstag der Anmeldung: 23.04.1997
(73) Patentinhaber: LEONHARD KURZ GMBH & CO., 90763 Fürth (DE); DEUTSCHE BUNDESBANK, 60431 Frankfurt am Main (DE)
(72) Erfinder: REINHART, Werner, D-90429 Nürnberg (DE); HERRMANN, Jürgen, D-64665 Alsbach 2 (DE)
(74) Vertreter: LOUIS, PÖHLAU, LOHRENTZ & SEGETH
(86) Internationale Anmeldenummer: DE9500827
(87) Internationale Veröffentlichungsnummer: WO9601457

(56) Entgegenhaltungen:
- EP-A- 0 360 969
- EP-A- 0 366 858

## Beschreibung

Die Erfindung betrifft eine Strukturanordnung, bestehend aus mehreren eine beugungsoptisch wirksame Reliefstruktur aufweisenden Teilbereichen, insbesondere für visuell identifizierbare, optische Sicherheitslemente für Wertdokumente, z.B. Banknoten, Kreditkarten, Ausweise oder Scheckdokumente, oder sonstige zu sichernde Gegenstände, wobei auf einem Flächenabschnitt der Strukturanordnung eine erste Gruppe von Teilbereichen mit einer ersten beugungsoptisch wirksamen Struktur und wenigstens eine weitere Gruppe von Teilbereichen mit einer von der ersten Struktur abweichenden beugungsoptisch wirksamen weiteren Struktur vorgesehen ist und die Teilbereiche so bemessen sind, dass sie mit dem bloßen Auge nicht auflösbar sind.

Eine derartige Strukturanordnung ist im einfachsten Fall durch eine geradlinige, auf der Oberfläche eines Trägerelementes vorgesehene Wellenstruktur realisiert, an der einfallendes Umgebungslicht unter Beugung und/oder Brechung reflektiert wird. In der Form des reflektierten Lichtes kann einem Betrachter eine den beugungsoptisch wirksamen Reliefstrukturen der Teilbereiche entsprechende und u.a. vom Betrachtungswinkel anbhängige, visuell wahrnehmbare Information vermittelt werden.

Die Beugung einfallenden Umgebungslichtes an den Reliefstrukturen der Teilbereiche und damit die von dort ausgesandte Information in Form eines optischen Beugungsbildes werden bestimmt durch die Anzahl der Wellen- oder Gitterlinien pro Längeneinheit eines Teilbereiches, die sogenannte Spatialfrequenz, sowie durch die Querschnittsform der Reliefstruktur, die u.a. durch die Höhenunterschiede in der Reliefstruktur definiert ist, und zwar sowohl durch die Höhenunterschiede zwischen den einzelnen Erhebungen untereinander als auch zwischen Erhebungen und Tälern der Reliefstruktur. Die Refliefstrukturen der Teilbereiche oder der Gruppen von Teilbereichen können so ausgebildet und die Teilbereiche so angeordnet werden, dass eine bestimmte Information von einer bestimmten Gruppe von Teilbereichen ausgehend in einen bestimmten Betrachtungswinkelbereich gesandt und von einem Betrachter wahrgenommen werden kann, wohingegen in einem anderen Betrachtungswinkelbereich keine oder eine andere Information wahrgenommen werden kann.

Durch die Verwendung von an sich bekannten Sicherheitselementen mit einer beugungsoptisch wirksamen Strukturanordnung bei den eingangs erwähnten zu sichernden Gegenständen ist es möglich, auch dem ungeübten Laien Echtheitsinformationen des gesicherten Gegenstandes sichtbar zu machen und gleichzeitig eine Fälschung, z.B. in Form einer Vervielfältigung, unter Berücksichtigung bekannter Fälschungsverfahren, insbesondere optischer Vervielfältigungsverfahren, unmöglich zu machen oder hinreichend zu erschweren.

Es wird angestrebt, eine Strukturanordnung so auszubilden, dass eine von ihr ausgehende visuell wahrnehmbare Information ästhetischen Gesichtspunkten genügt, so dass bei einem Betrachter z.B. ein besonders brillanter oder sehr homogener gleichmässiger Bildeindruck entsteht, der z.B. ein informationsvermittelndes Zeichen oder Symbol umfassen kann. Es kann aber auch angestrebt werden, bei einem Betrachter den Eindruck einer besonders brillanten Farbdarstellung oder den Eindruck sehr homogener, gleichmässiger Farbgebung zu wecken.

Dies wurde in der Vergangenheit dadurch zu erreichen gesucht, dass die Teilbereiche als kleinste Trägereinheit einer bestimmten optischen Information, sogenannte Pixel, eine Abmessung in der Grössenordnung von etwa 60 x 60 µm aufweisen; es werden jedoch auch Pixel verwendet, deren Abmessung erheblich unter dem angegebenen Wert liegt.

Bei der Ausbildung von Strukturanordnungen erweist sich häufig die Vorgabe als problematisch, einem Betrachter eine bestimmte, von einem insbesondere begrenzten Flächenbereich der Strukturanordnung ausgehende, visuell wahrnehmbare Information über einen verhältnismässig grossen Betrachtungswinkelbereich hinweg zu übermitteln. So kann es beispielsweise erwünscht sein, einem Betrachter unter Verwendung der Strukturanordnung innerhalb eines etwa 30° zu seiner Vertikalen auf dem betrachteten Flächenbereich betragenden Betrachtungswinkelbereiches einen roten Farbeindruck zu vermitteln.

Bekannte Strukturanordnungen umfassen auf dem betrachteten Flächenbereich eine Gruppe von Teilbereiche mit einer bestimmten, die gewünschte Information - z.B. roter Farbeindruck - tragenden Struktur. Das unter Verwendung einer solchen Strukturanordnung bei Beleuchtung derselben ausgesandte Beugungsbild vermittelt jedoch nicht über den gesamten, verhältnismässig grossen Betrachtungswinkelbereich dieselbe bestimmte Information. Ein verhältnismässig grosser Betrachtungswinkelbereich soll hierbei so verstanden werden, dass bei Betrachtung unter verschiedenen Winkeln innerhalb dieses Bereiches mit dem blossen Auge Unterschiede in der übermittelten Information festgestellt werden können, also z.B. ein von rot nach orange changierender Farbeindruck wahrgenommen wird. Weiter erweist es sich bei bekannten Strukturanordnungen als nachteilig, dass in einer bestimmten Betrachtungsrichtung nur ein kleiner Teil der von den Teilbereichen jeweils ausgesandten Beugungsstrahlung und somit nur eine geringe Intensität von dem Betrachter wahrgenommen werden kann.

Eine gattungsgemässe Strukturanordnung ist aus der EP-A 0 360 969 bekannt. Dabei hängen die wahrnehmbaren Informationen der einzelnen Teilflächen von der Betrachungsrichtung ab. Damit soll erreicht werden, dass in unterschiedlichen Betrachungswinkel-Bereichen unterschiedliche, visuell wahrnehmbare Informationen von unterschiedlichen Reliefstrukturen der Teilbereiche erhalten werden, um so eine leicht erkennbare Markierung zu erreichen.

Aus der EP-A 0 366 858 ist ein auf einem Träger angeordnetes Strichcodefeld mit Strichelementen und Hintergrundelementen mit eingeprägten Reliefstrukturen bekannt, wobei sich die Reliefstrukturen durch wenigstens einen Parameter unterscheiden. Diese Strichelemente einerseits sowie die Hintergrundelemente andererseits bilden jeweils Teilflächen-Gruppen, wobei die einzelnen Teilflächen entsprechend der üblichen Ausbildung von Strichcodes Striche unterschiedlicher Breite darstellen.

Der Erfindung liegt die Aufgabe zugrunde, eine Strukturanordnung der eingangs beschriebenen Art zu schaffen, die es gestattet, einem Betrachter eine bestimmte, visuell wahrnehmbare Information über die gesamte Ausdehnung eines vorbestimmten Betrachtungswinkel-Bereiches gleichmässig und mit hoher Intensität zu vermitteln, wobei die Strukturanordnung einfach und auf wirtschaftliche Weise herstellbar sein soll.

Diese Aufgabe wird bei der eingangs beschriebenen Strukturanordnung erfindungsgemäss dadurch gelöst, dass die Struktur der Teilbereiche der ersten bzw. der wenigstens einen weiteren Gruppe so ausgebildet ist, dass bei Beleuchtung der Strukturanordnung von den Teilbereichen unterschiedlicher Gruppen ausgehende visuell wahrnehmbare Informationen von verschiedenen Teilwinkelbereichen eines Betrachtungswinkelbereiches aus gesehen identisch sind.

Bei einer solchen erfindungsgemäss ausgebildeten Strukturanordnung wird die über einen vorbestimmten Betrachtungswinkelbereich erwünschte Information in Abhängigkeit des Betrachtungswinkels von den Teilbereichen der ersten oder der wenigstens einen weiteren Gruppe ausgesandt oder übermittelt. Es ist möglich, die Struktur der jeweiligen Teilbereiche unterschiedlicher Gruppenzugehörigkeit so auszubilden, dass sich die von diesen angesprochenen Teilwinkelbereiche überlappen. Vorzugsweise sind die jeweiligen Strukturen so ausgebildet, dass die Teilwinkelbereiche aneinander angrenzen.

Es ist insbesondere vorteilhaft, wenn mehr als zwei Gruppen von Teilbereichen mit voneinander abweichenden Strukturen vorgesehen sind, da dann ein vorbestimmter Betrachtungswinkelbereich in mehrere Abschnitte zerlegbar ist. Jeder der Abschnitte ist dann einer anderen Gruppe von Teilbereichen zugeordnet. Die innerhalb eines Abschnittes wahrnehmbare Information geht dann von der betreffenden Struktur der dem Abschnitt zugeordneten Gruppe von Teilbereichen aus. Um bei einem Betrachter einen gleichmässigen Bildeindruck zu wecken, wird erfindungsgemäss vorgeschlagen, die Teilbereiche unterschiedlicher Gruppenzugehörigkeit alternierend auf dem betrachteten Flächenabschnitt anzuordnen. Für einen Betrachter ist es dann nicht möglich festzustellen, ob oder dass bei Veränderung des Betrachtungswinkels auch ein Wechsel von einer gerade "aktiven" Gruppe von Teilbereichen zu einer anderen stattfindet. Weiter wird vorgeschlagen, die Teilbereiche der jeweiligen Gruppen zeilenförmig anzuordnen, insbesondere dergestalt, dass auf eine Zeile aus Teilbereichen einer Struktur eine Zeile aus Teilbereichen einer anderen Struktur folgt.

Insbesondere im Falle der zeilenweisen Anordnung der Teilbereiche wird in Weiterbildung der Erfindung vorgeschlagen, die Teilbereiche streifen- oder bandförmig auszubilden, d.h. die Teilbereiche mit einer Längserstreckung auszubilden, die ihre Quererstreckung um ein Vielfaches übersteigt. Durch die streifen- oder bandförmige Ausbildung der Teilbereiche wird auch der unerwünschte Einfluss der Übergangsbereiche zwischen Reliefstrukturen aneinander angrenzender Teilbereiche reduziert, der sich in unerwünschten, zusätzlichen Beugungserscheinungen zeigt. Weiter werden die Anzahl und die gesamte Fläche der Bereiche, die zu einer Informationsübermittlung nicht oder nur unwesentlich beitragen, drastisch reduziert, z.B. Anzahl und Fläche der Eckbereiche von quadratischen Teilbereichen mit insbesondere gekrümmten Relieflinien, die sich zu den Ecken hin verkürzen.

Weitere Merkmale, Einzelheiten und Vorteile der Erfindung ergeben sich aus der beigefügten Zeichnung sowie aus der nachfolgenden Beschreibung bevorzugter Ausführungsformen der erfindungsgemässen Strukturanordnung.

Es zeigen -:
- Figur 1: einen zu sichernden Gegenstand mit einem Sicherheitselement in schematischer Darstellung;
- Figur 2: eine schematische Darstellung des informationstragenden Beugungsbildes bei einer Strukturanordnung des Standes der Technik;
- Figur 3: eine schematische Darstellung der Informationsverteilung des Beugungsbildes bei einer erfindungsgemässen Strukturanordnung;
- Figur 4: eine bevorzugte Ausführungsform einer erfindungsgemässen Strukturanordnung zur Erzeugung der in Figur 3 dargestellten Informationsverteilung und
- Figur 5: eine Transferfolie für eine erfindungsgemässe Strukturanordnung.

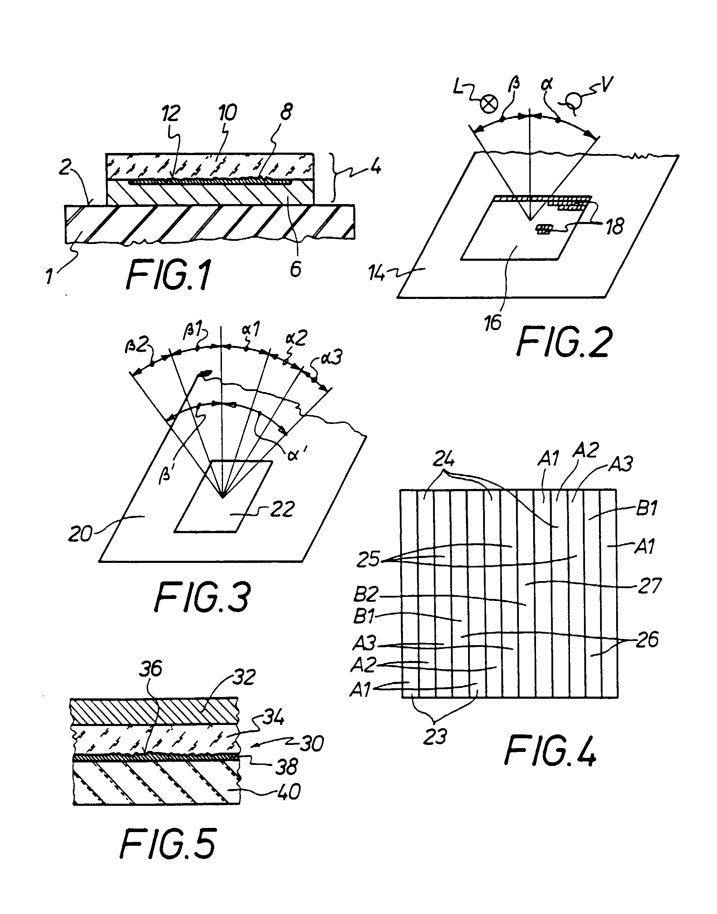

Figur 1 zeigt einen zu sichernden Gegenstand 1, beispielsweise eine aus Kunststoff bestehende Scheckkarte oder dergleichen. Auf einer Oberfläche 2 des zu sichernden Gegenstandes 1 ist ein zusammenfassend mit der Bezugsziffer 4 bezeichnetes Sicherheitselement ausgebildet. Das Sicherheitselement 4 umfasst einen Substratbereich 6, eine dünne metallische Schicht 8 sowie eine transparente Deckschicht 10. Die Deckschicht 10 weist auf ihrer dem zu schützenden Gegenstand zugewandten Seite eine aus Wellen- oder Gitterlinien bestehende reliefartige Oberflächenstruktur 12 auf - im folgenden als Strukturanordnung bezeichnet -, auf welche die metallische Schicht 8 aufgebracht, insbesondere aufgedampft wurde.

In der Figur 2 ist mit dem Bezugszeichen 14 eine Strukturanordnung des Standes der Technik und mit dem Bezugszeichen 16 ein noch näher zu beschreibender Flächenabschnitt dieser Strukturanordnung angedeutet. Bei Beleuchtung mit einer Lichtquelle L, wie sie z.B. in Form diffusen Tageslichtes gegeben sein kann, entsteht ein durch reliefartige Oberflächenstrukturen von Teilbereichen 18 der Strukturanordnung 14 hervorgerufenes Beugungsbild, mittels dessen einem Betrachter V in an sich bekannter Weise eine visuell wahrnehmbare Information vermittelt werden kann. Die Teilbereiche 18 weisen in der Figur 2 nicht darstellbare Oberflächenstrukturen auf, die für die Übermittlung von visuell wahrnehmbaren Informationen in dem bei Beleuchtung entstehenden Beugungsbild verantwortlich sind. So soll in dem dargestellten Fall für Betrachtungswinkel, die innerhalb eines in der Figur 2 dargestellten Betrachtungswinkelbereiches α liegen, eine bestimmte optische Information übertragen werden, beispielsweise in Form eines roten Farbeindruckes, der sich über den gesamten Flächenabschnitt 16 erstrecken soll. Für einen anderen Betrachtungswinkelbereich, der durch den Winkel β zu einer vertikal auf der Strukturanordnung stehenden Ebene angedeutet ist, soll der Flächenabschnitt 16 für einen Betrachter grün erscheinen. Da die mittels einer beugungsoptisch wirksamen Struktur in Form eines Beugungsbildes übertragene Information bekanntermassen von der Orientierung der Struktur bzw. der sie tragenden Teilbereiche zur Betrachtungsrichtung abhängt, ist es strenggenommen nur möglich, eine bestimmte, diskrete Information innerhalb eines sehr kleinen Betrachtungswinkelbereiches zu übermitteln. Dies hat zur Folge, dass ein Betrachter V nicht innerhalb des gesamten Betrachtungswinkelbereiches α dieselbe Information - roter Farbeindruck - wahrnimmt, sondern möglicherweise einen in Abhängigkeit des Betrachtungswinkels von rot nach orange changierenden Farbeindruck vermittelt bekommt. Auch die Intensität des übermittelten Farbeindruckes wird über den Betrachtungswinkelbereich variieren.

Figur 3 zeigt eine der Figur 2 entsprechende schematische Darstellung der Informationsverteilung innerhalb des Beugungsbildes bei einer erfindungsgemässen Strukturanordnung 20, von der ein Flächenabschnitt 22 angedeutet ist. Der Flächenabschnitt 22 ist derart ausgebildet, dass einem Betrachter V innerhalb eines Betrachtungswinkelbereiches α' der Flächenabschnitt 22 rot erscheint, innerhalb eines Betrachtungswinkelbereiches β' hingegen grün. Anders als bei der Strukturanordnung 14 der Figur 2 werden zur Erzeugung des roten Farbeindruckes innerhalb des Betrachtungswinkelbereiches α' nicht nur Teilbereiche einer einzigen beugungsoptisch wirksamen Struktur verwendet, sondern es sind Gruppen von Teilbereichen 23, 24, 25 mit entsprechend ihrer Gruppenzugehörigkeit voneinander abweichender Strukur A1, A2 bzw. A3 vorgesehen.

In Figur 4 ist ein Ausschnitt des Flächenabschnittes 22 dargestellt. Er umfasst Gruppen von Teilbereichen 23, 24, 25 zur Erzeugung und Übermittlung des roten Farbeindruckes sowie Gruppen von Teilbereichen 26, 27 zur Erzeugung und Übermittlung des grünen Farbeindruckes. Dabei sind für die Aussendung des bestimmten, roten Farbeindruckes in einen Teilwinkelbereich α1 des Betrachtungswinkelbereiches α' Teilbereiche 23 der Gruppe mit einer Struktur A1 verantwortlich und für die Teilwinkelbereiche α2 und α3 Teilbereiche 24, 25 der Gruppen mit der Struktur A2 bzw. A3. In entsprechender Weise tragen die Gruppen von Teilbereichen 26 und 27 beugungsoptisch wirksame Strukturen B1 bzw. B2 zur Übermittlung der anderen bestimmten Information - grüner Farbeindruck - in Teilwinkelbereichen β1 bzw. β2 des Betrachtungswinkelbereiches β'.

Bei Veränderung des Betrachtungswinkels, beispielsweise von dem Teilwinkelbereich α1 in den Teilwinkelbereich α2, tritt an die Stelle der Gruppe mit Teilbereichen 23 der Struktur A1 die Gruppe mit Teilbereichen 24 der Struktur A2. Wenn die einzelnen Teilbereiche so bemessen sind, dass sie mit dem blossen Auge nicht auflösbar sind, so wird ein solcher Wechsel von einer Gruppe "aktiver" Teilbereiche zu einer anderen von einem Betrachter nicht bemerkt werden; ihm wird über den gesamten Betrachtungswinkelbereich α1 bzw. β1 der gewünschte Farbeindruck gleichmässig und mit hoher Intensität übermittelt.

Figur 5 zeigt einen einfachen, prinzipiellen Aufbau einer erfindungsgemässen Transferfolie 30 mit einer oberen, nach dem Aufbringen der Strukturanordnung auf einen zu sichernden Gegenstand zu entfernenden Trägerfolie 32. An die dem zu sichernden Gegenstand zugewandte Seite der Trägerfolie 32 schliesst sich eine transparente Schicht 34 mit einer erfindungsgemässen Strukturanordnung 36 an, welch letztere mit einer dünnen metallischen Schicht 38 bedampft ist. Schliesslich weist die Transferfolie eine Kleberschicht 40 auf, mittels derer die Verbindung zu einem zu sichernden Gegenstand hergestellt werden kann.

## Patentansprüche

1. Strukturanordnung (20), bestehend aus mehreren eine beugungsoptisch wirksame Reliefstruktur aufweisenden Teilbereichen (23, 24, 25, 26, 27), insbesondere für visuell identifizierbare, optische Sicherheitselemente für Wertdokumente, z.B. Banknoten, Kreditkarten, Ausweise oder Scheckdokumente, oder sonstige zu sichernde Gegenstände, wobei auf einem Flächenabschnitt (22) der Strukturanordnung eine erste Gruppe von Teilbereichen (23, 24, 25) mit einer ersten beugungsoptisch wirksamen Struktur (A1, A2, A3) und wenigstens eine weitere Gruppe von Teilbereichen (26, 27) mit einer von der ersten Struktur (A1, A2, A3) abweichenden beugungsoptisch wirksamen weiteren Struktur (B1, B2) vorgesehen ist und die Teilbereiche (23, 24, 25, 26, 27) so bemessen sind, dass sie mit dem bloßen Auge nicht auflösbar sind
**dadurch gekennzeichnet,**
dass die Struktur (A1, A2, A3; B1, B2) der Teilbereiche (23, 24, 25; 26, 27) der ersten bzw. der wenigstens einen weiteren Gruppe so ausgebildet ist, dass bei Beleuchtung der Strukturanordnung von den Teilbereichen (23, 24, 25; 26, 27) unterschiedlicher Gruppen ausgehende visuell wahrnehmbare Informationen von verschiedenen Teilwinkelbereichen (α1, α2, α3; β1, β2) eines Betrachtungswinkelbereiches (α', β') aus gesehen identisch sind.

2. Strukturanordnung nach Anspruch 1,
**dadurch gekennzeichnet,**
dass die Struktur (A1, A2, A3; B1, B2) der Teilbereiche (23, 24, 25; 26, 27) der jeweiligen Gruppe so ausgebildet ist, dass die verschiedenen Teilwinkelbereiche (α1, α2, α3; β1, β2) aufeinander folgen oder aneinander angrenzen.

3. Strukturanordnung nach Anspruch 1 oder 2,
**dadurch gekennzeichnet,**
dass Teilbereiche (23, 24, 25; 26, 27) unterschiedlicher Gruppenzugehörigkeit alternierend angeordnet sind.

4. Strukturanordnung nach einem der vorstehenden Ansprüche,
**dadurch gekennzeichnet,**
dass Teilbereiche (23, 24, 25; 26, 27) einer Gruppe zeilenförmig angeordnet sind.

5. Strukturanordnung nach Anspruch 4,
**dadurch gekennzeichnet,**
dass Zeilen aus Teilbereichen (23, 24, 25) einer Struktur (A1, A2, A3) und Zeilen aus Teilbereichen (26, 27) einer anderen Struktur (B1, B2) abwechselnd angeordnet sind.

## Claims

1. Structural arrangement (20), comprising a plurality of subregions (23, 24, 25, 26, 27) having a relief structure which is active in terms of optical diffraction, in particular for visually identifiable, optical security elements for valuable documents, for example banknotes, credit cards, identity cards, cheque documents, or other objects to be safeguarded, there being provided on one surface section (22) of the structural arrangement a first group of subregions (23, 24, 25) with a first structure (A1, A2, A3) which is active in terms of optical diffraction, and at least one further group of subregions (26, 27) with a further structure (B1, B2) which differs from the first structure (A1, A2, A3) and is active in terms of optical diffraction, and the subregions (23, 24, 25, 26, 27) being dimensioned such that they cannot be resolved with the naked eye, characterized in that the structure (A1, A2, A3; B1, B2) of the subregions (23, 24, 25; 26, 27) of the first and the at least one further group is constructed such that upon illumination of the structural arrangement, visually perceptible information emanating from the subregions (23, 24, 25; 26, 27) of different groups is identical when seen from different angular subregions (α1, α2, α3; β1, β2) of an angular viewing region (α', β').

2. Structural arrangement according to Claim 1, characterized in that the structure (A1, A2, A3; B1, B2) of the subregions (23, 24, 25; 26, 27) of the respective group is constructed such that the different angular subregions (α1, α2, α3; β1, β2) follow one another or adjoin one another.

3. Structural arrangement according to Claim 1 or 2, characterized in that subregions (23, 24, 25; 26, 27) of different group membership are arranged alternately.

4. Structural arrangement according to one of the preceding claims, characterized in that subregions (23, 24, 25; 26, 27) of a group are arranged in the form of rows.

5. Structural arrangement according to Claim 4, characterized in that rows of subregions (23, 24, 25) of one structure (A1, A2, A3) and rows of subregions (26, 27) of another structure (B1, B2) are arranged alternately.

## Revendications

1. Agencement de structure (20), constitué de plusieurs zones partielles (23, 24, 25, 26, 27) présentant une structure en relief ayant un effet de diffraction optique, notamment pour éléments de sécurité optique identifiables visuellement pour documents de valeur, par exemple billets de banque, cartes de crédit, papiers d'identité ou documents du type chèque, ou autres objets à protéger, agencement dans lequel il est prévu, sur une section de surface (22) de l'agencement de structure, un premier groupe de zones partielles (23, 24, 25) présentant une première structure ayant un effet de diffraction optique (A1, A2, A3) et au moins un autre groupe de zones partielles (26, 27) présentant une autre structure ayant un effet de diffraction optique (B1, B2) qui diffère de la première structure (A1, A2, A3) et les zones partielles (23, 24, 25, 26, 27) sont dimensionnées de façon à ne pas pouvoir être séparées à l'oeil nu, caractérisé en ce que les structures (A1, A2, A3 ; B1, B2) des zones partielles (23, 24, 25 ; 26, 27) respectivement du premier groupe et d'au moins un autre groupe sont agencées de façon que, lorsque l'agencement de structure est éclairé, des informations observables visuellement qui proviennent de groupes différents parmi les zones partielles (23, 24, 25 ; 26, 27) sont identiques lorsqu'on observe à partir de différentes zones angulaires partielles (α1, α2, α3 ; β1, β2) d'une zone angulaire d'observation (α', β').

2. Agencement de structure suivant la revendication 1, caractérisé en ce que les structures respectives (A1, A2, A3 ; B1, B2) des zones partielles (23, 24, 25 ; 26, 27) de chaque groupe sont agencées de façon telle que les différentes zones angulaires partielles (α1, α2, α3 ; β1, β2) se suivent ou sont adjacentes l'une à l'autre.

3. Agencement de structure suivant la revendication 1 ou 2, caractérisé en ce que des zones partielles (23, 24, 25 ; 26, 27) à appartenances de groupe différentes sont disposées d'une manière alternée.

4. Agencement de structure suivant l'une des revendications précédentes, caractérisé en ce que les zones partielles (23, 24, 25 ; 26, 27) d'un groupe sont disposées en forme de ligne.

5. Agencement de structure suivant la revendication 4, caractérisé en ce que des lignes appartenant à des zones partielles (23, 24, 25) d'une structure (A1, A2, A3) et des lignes appartenant à des zones partielles (26, 27) d'une autre structure (B1, B2) sont disposées d'une manière alternée.
